# EUROPÄISCHE PATENTSCHRIFT

(11) **EP 1 270 917 B1**
(45) Veröffentlichungstag und Bekanntmachung des Hinweises auf die Patenterteilung: **19.07.2006**
(21) Anmeldenummer: 02005475.5
(22) Anmeldetag: 09.03.2002
(51) Int. Cl.: F02F 1/24, F02M 35/10

(54) **Zwischenflanschsystem für eine direkteinspritzende Brennkraftmaschine**
Intermediate flange for a direct injection combustion engine
Bride intermédiaire pour un moteur à combustion interne à injection directe

(30) Priorität: 27.06.2001 DE 10131110
(43) Veröffentlichungstag der Anmeldung: 02.01.2003
(73) Patentinhaber: Mann + Hummel GmbH, 71638 Ludwigsburg (DE)
(72) Erfinder: Klotz, Arthur, 71686 Remseck (DE); Rentschler, Klaus, 71126 Gäufelden (DE); Schraudolf, Joachim, 74078 Heilbronn (DE)
(74) Vertreter: Voth, Gerhard

(56) Entgegenhaltungen:
- DE-A- 19 920 195
- DE-A- 19 946 861
- US-A- 5 163 406
- US-A- 5 465 699
- US-A- 5 482 021

## Beschreibung

### Stand der Technik

Die Erfindung betrifft ein Zwischenflanschsystem, wie es bei einer direkteinspritzenden Brennkraftmaschine im Ansaugtrakt zur Leitung der Ansaugluft und des Kraftstoffs verwendet wird, nach dem Oberbegriff des Patentanspruches 1.

Außerdem betrifft die Erfindung eine erste und eine zweite Baugruppe, die in das genannte Zwischenflanschsystem eingebaut werden kann nach den Oberbegriffen der Ansprüche 7 und 8.

Ein Zwischenflanschsystem der Eingangs beschriebenen Art ist beispielsweise aus der DE 199 20 195 A1 bekannt. Derartige Zwischenflansche übernehmen bei direkteinspritzenden Brennkraftmaschinen im wesentlichen zweierlei Aufgaben, für die die entsprechenden Teile in den Zwischenflansch integriert werden können.

Zum Einen ist die Durchleitung der Verbrennungsluft von einem Eintritt hin zu einem Austritt möglich, wodurch die Luft von einem Saugrohr in den Zylinderkopf der Brennkraftmaschine geleitet werden kann. Im Bereich des Zwischenflansches ist weiterhin eine sogenannte Ladungsbewegungsklappe untergebracht, die je nach Einbauart die Luftströmung im Zylinder mit einer Tumble- oder Swirlströmung versehen kann.

Weitere wichtige Aufgabe ist die Unterbringung des Leitungssystems zur direkten Einspritzung des Kraftstoffes in die Zylinder. Diese steht unter enormem Druck, weswegen der Zwischenflansch entsprechend ausgelegt werden muss. Dieser ist im Allgemeinen aus Metall, zum Beispiel Aluminium gefertigt, während die Saugkanäle, welche sich an die saugrohrseitigen Öffnungen des Zwischenflansches anschließen, aus Kunststoff gefertigt sein können.

Die Wahl des Werkstoffes ist jedoch von den hohen Beanspruchungen durch das Kanalsystem für den Kraftstoff bestimmt. Die genannten Festigkeitswerte müssen jedoch nicht für die Durchleitung der Verbrennungsluft durch die Saugkanäle erreicht werden. In diesem Bereich des Zwischenflansches ist der Zwischenflansch daher auf ein Mehrfaches der auftretenden Belastung aufgrund des Saugrohrinnendrucks ausgelegt. Das Bauteil wird daher unnötig schwer, auch wenn es die Verwendung eines Kunststoffsaugrohres ermöglicht.

Aufgabe der Erfindung ist es daher ein Zwischenflanschsystem für eine direkteinspritzende Brennkraftmaschine zu schaffen, welches bei zuverlässiger Erfüllung seiner Funktion ein geringes Gewicht aufweist. Diese Aufgabe wird durch die Merkmale des Patentanspruches 1 sowie die Merkmale der Patentansprüche 7 und 8 gelöst.

### Vorteile der Erfindung

Das erfindungsgemäße Zwischenflanschsystem weist in bekannter Weise die bereits beschriebenen Kanalsysteme für die Verbrennungsluft bzw. den Kraftstoff auf. Es ist dadurch gekennzeichnet, dass das Kanalsystem für den Kraftstoff in einer ersten Baugruppe untergebracht ist, welche die für den auftretenden Druck ausreichende Festigkeit gewährleistet. Die Saugkanäle sind jedoch in einer zweiten Baugruppe untergebracht, die vorrangig aus einem Werkstoff geringerer Festigkeit besteht, wobei die geringere Festigkeit im Vergleich zur Festigkeit der ersten Baugruppe zu verstehen ist. Beide Baugruppen lassen sich zum Zwischenflanschsystem zusammenfügen und ergeben somit ein kompaktes Bauteil, welches als Gesamtkonzept alle Anforderungen an das Zwischenflanschsystem erfüllt. Insbesondere ist das Zwischenflanschsystem aufgrund der beiden ineinandergreifende Baugruppen mit den selben geometrischen Abmessungen versehen, wie dies aus einteiligen Zwischenflanschkörpern gemäß dem Stand der Technik aus Metall zu finden ist. Bei gleichen geometrischen Abmessungen läßt sich somit für die Baugruppe, die aus einem Werkstoff geringerer Festigkeit besteht, auch ein Werkstoff geringerer Dichte auswählen, wodurch die Forderung an ein wirtschaftlich zu fertigendes Bauteil mit geringerem Bauteilgewicht erfüllt wird.

Die zugehörige Brennkraftmaschine für den Zwischenflansch ist eine direkteinspritzende Brennkraftmaschine, um das der Erfindung inne wohnende Einsparungspotential wirksam nutzen zu können. Dabei können sowohl Dieselmotoren als auch direkteinspritzende Ottomotoren zur Verwendung kommen.

Gemäß einer weiteren Ausgestaltung der Erfindung sind entweder die Saugkanäle oder das Kanalsystem für den Kraftstoff zu einem ersten oder einem zweiten Grundkörper zusammengefaßt welcher dann zusammen mit weiteren Funktionsbauteilen die besagte erste und zweite Baugruppe bilden. Dabei können die Saugkanäle bzw. das Kanalsystem auch in mehr als einer Gruppe zu jeweiligen Grundkörpern zusammengefaßt werden. Dies ist zum Beispiel sinnvoll, wenn es sich um eine Brennkraftmaschine in V- bzw. W-Anordnung der Zylinder handelt. Hier kann für jede Zylinderbank eine solche Baugruppe gebildet werden.

Die besagten weiteren Funktionsbauteile sind im Falle der zweiten Baugruppe beispielsweise das System von Ladungsbewegungsklappen, Verbindungsmanschetten zwischen Zwischenflansch und Saugrohr aus Gummi oder die Dichtung im Flansch hin zum Zylinderkopf. Die Funktionsbauteile der ersten Baugruppe können durch die Einspritzventile sowie Verschlußstopfen gebildet werden, wobei letztere die bevorzugt in die Struktur gebohrten Kanäle an deren Ende verschließen.

Gemäß einer weiteren Ausgestaltung der Erfindung kann die erste Baugruppe vorrangig aus Metall und zweite Baugruppe vorrangig aus Kunststoff gefertigt sein. Mit vorrangig ist gemeint, dass die bereits erwähnten Funktionsbauteile auch aus anderen Materialien > gefertigt sein können. Auf jeden Fall sind jedoch die Grundkörper aus den genannten Materialien. Dabei kommt für die erste Baugruppe zum Beispiel Aluminiumdruckguß in Frage. Die zweite Baugruppe kann beispielsweise aus einem glasfaserverstärkten Polyamid gefertigt werden. Durch die genannte Werkstoffwahl läßt sich der durch den zweiteiligen Aufbau des Zwischenflanschsystems erreichbare Kosten- sowie Gewichtsvorteil optimal ausnützen.

Eine vorteilhafte Ausbildung der Erfindung sieht weiterhin vor, dass die Befestigungsmittel, die insbesondere durch Schrauben gebildet werden, in der ersten Baugruppe vorgesehen werden. Dies ist ohnehin die festere Baugruppe, bei der eine Fixierung des Zwischenflanschsystems am Zylinderkopf ohne weitere Verstärkungen erfolgen kann. Die zweite Baugruppe wird durch die Montage der ersten Baugruppe gleichzeitig mitgehalten. Dies läßt sich so vorstellen, dass die zweite Baugruppe die erste klammerartig umgibt, wodurch diese am Einbauort fixiert wird. Der große Vorteil ist, dass die zweite Baugruppe, die aus dem weniger festen Material ist, keine zusätzlichen Verstärkungen benötigt, die eine gesonderte Montage ermöglichen. Auf diese Weise können Verstärkungshülsen und ähnliches eingespart werden, die normalerweise bei der Fixierung von Zylinderkopfflanschen aus Kunststoff nötig werden würden.

Dabei kann das Befestigungsmittel durchaus durch die zweite Baugruppe hindurchgeführt werden. Hierzu können zum Beispiel Bohrungen angeordnet sein, durch die die Befestigungsschrauben gesteckt werden. Die Abstützung der Befestigungsschrauben erfolgt jedoch in der ersten Baugruppe, so dass eine Verteilung des Anpressdruckes innerhalb der zweiten Baugruppe erfolgen kann.

Die erste sowie die zweite Baugruppe sind auch für sich genommen unter Schutz gestellt, soweit sie geeignet sind, im Zusammenwirken mit der jeweils anderen Baugruppe die erfindungsgemäße Zwischenflanschvorrichtung gemäß Anspruch 1 zu erzeugen.

### Zeichnung

Weitere Einzelheiten der Erfindung werden in der Zeichnung anhand von schematischen Ausführungsbeispielen beschrieben. Hierbei zeigen
- Figur 1: das erfindungsgemäße Zwischenflanschsystem als perspektivische Explosionszeichnung,
- Figur 2: einen Schnitt durch das Zwischenflanschsystem gemäß Figur 1 entlang eines der Saugkanäle im montierten Zustand am Zylinderkopf,
- Figur 3: die Schematische Ansicht eines montierten Zwischenflanschsystems mit Brennkraftmaschine und Saugrohr,
- Figur 4: eine alternative Ausgestaltung des Zwischenflanschsystems in einer Darstellung analog zu Figur 2 und
- Figur 5: eine perspektivische Ansicht des Zwischenflanschsystems gemäß Figur 4 als Ausschnitt.

### Beschreibung der Ausführungsbeispiele

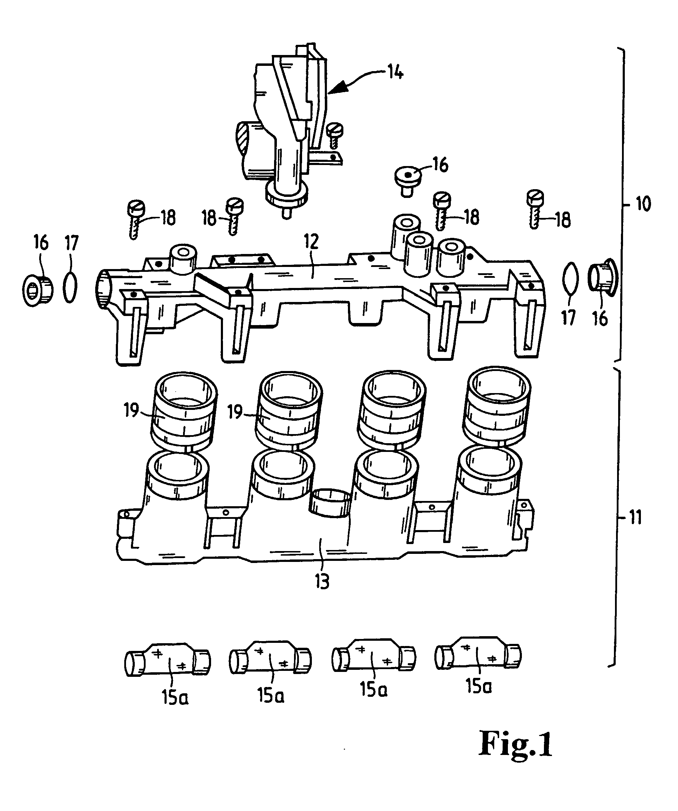

Das Zwischenflanschsystem gemäß Figur 1 besteht aus einer ersten Baugruppe 10 und einer zweiten Baugruppe 11. Dabei weist sowohl die erste Baugruppe einen ersten Basiskörper 12 als auch die zweite Baugruppe 11 einen zweiten Basiskörper 13 auf. Diese Basiskörper dienen zur Montage weiterer Funktionsbauteile. Am ersten Basiskörper 12 ist eine Antriebseinheit 14 angeflanscht, die mit Ladungsbewegungsklappen 15a über eine Welle (nicht dargestellt) in Verbindung steht. Diese können mittels der Antriebseinheit daher stufenlos im Winkel verstellt werden.

Weiterhin sind verschiedene Verschlußstopfen 16 dargestellt, mit denen die im ersten Basiskörper gebildeten Kanalstrukturen an den Enden verschlossen werden können. Hierbei kommen weiterhin Dichtringe 17 zum Einsatz. Die zu verschließenden Öffnungen kommen durch eine Herstellung des ersten Basiskörpers als Aluminiumdruckgußteil zustande, da dieses Schiebekerne zur Herstellung der Hohlraumstrukturen aufweisen muss, die nach außen hin entformt werden müssen. Zuletzt wird die vormontierte erste Baugruppe mittels Schrauben 18 an einem nicht dargestellten Zylinderkopf montiert. Dabei ist zu erkennen, dass der erste Basiskörper den zweiten klammerartig umgibt, so dass dieser dabei gleich mit fixiert werden kann.

Der zweite Basiskörper weist neben den Ladungsbewegungsklappen 15a noch Gummimanschetten 19 auf, welche mit Hilfe nicht dargestellter Ringe eine Verbindung zum ebenfalls nicht dargestellten Saugrohr herstellen.

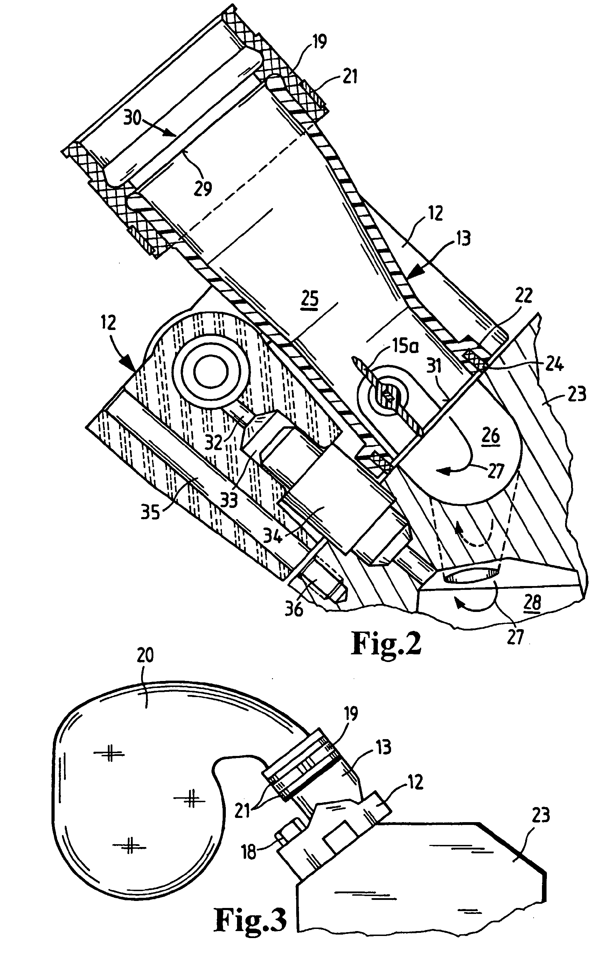

Die Wirkungsweise des montierten Zwischenflanschsystems läßt sich am Besten den Figuren 2 und 3 entnehmen. In Figur 3 läßt sich das Zwischenflanschsystem, bestehend aus erstem Basiskörper 12 und zweiten Basiskörper 13 erkennen. Ein Saugrohr 20 ist, wie bereits beschrieben mit Hilfe der Gummimanschette 19 an den zweiten Basiskörper 13 angeschlossen. Dabei kommen Befestigungsringe 21 zum Einsatz, deren genaue Gestalt auch Figur 2 zu entnehmen ist.

Mit einem Zylinderkopfflansch 22 (erkennbar in Figur 2) ist der zweite Basiskörper 13 an einem Zylinderkopf 23 einer nicht näher dargestellten Brennkraftmaschine angeschlossen. Die Befestigung an dieser Stelle erfolgt über die Schraube 18 mit Hilfe des ersten Basiskörpers 12.

Details des montierten Zwischenflanschsystems am Zylinderkopf 23 lassen sich der Figur 2 entnehmen. Zwischen Zylinderkopf und zweitem Basiskörper kommt eine Formdichtung 24 zum Einsatz, so dass die Verbrennungsluft von einem im zweiten Basiskörper 13 gebildeten Saugkanal 25 in einen Zuführkanal 26 im Zylinderkopf geleitet wird. Dabei ver-setzt die Ladungsbewegungsklappe 15a bei Schrägstellung die Ansaugluft in einen Tumble 27, angedeutet durch die Pfeile im Zuführkanal, welcher zu einer entsprechenden Verwirbelung in einem Brennraum 28 des Zylinders führt.

Zur Leitung der Ansaugluft bildet der Saugkanal 25 also nur ein Zwischenglied, zwischen Zylinderkopf 23 und Saugrohr 20 (vergleiche Figur 3). Dieser Saugkanal verläuft somit von einem Eintritt 29, der eine Schnittstelle 30 zum Saugrohr bildet, zu einem Austritt 31 der in der Ebene des Zylinderkopfes liegt.

Das erste Basisteil 12 bildet Kanalstrukturen 32 aus, welche zur Durchleitung des Kraftstoffs vorgesehen sind. Die Kanalstrukturen münden in Aufnahmen 33 für Einspritzventile 34 die wiederum in den Zylinderkopf bis in den Brennraum 28 hineinreichen (in Figur 2 ist jeweils eine Aufnahme mit entsprechendem Einspritzventil im Schnitt zu sehen - die anderen liegen außerhalb der Zeichenebene).

Weiterhin ist im Basisteil 12 eine Durchgangsbohrung 35 zu erkennen, die die Schraube 18 zur Befestigung aufnimmt. Im Zylinderkopf ist für die Schraube ein Gewindeloch 36 vorgesehen. Die Schraube selbst ist in Figur 2 nicht dargestellt (siehe jedoch Figur 3).

Weiterhin ist zu erkennen, dass der Basiskörper 12 außerhalb des geschnitten dargestellten Bereiches hinter dem Saugkanal 25 weitergeht und somit das Basisteil 13 klammerartig umgibt. Hierdurch wird auch der geforderte Anpreßdruck für die Formdichtung 24 erzeugt.

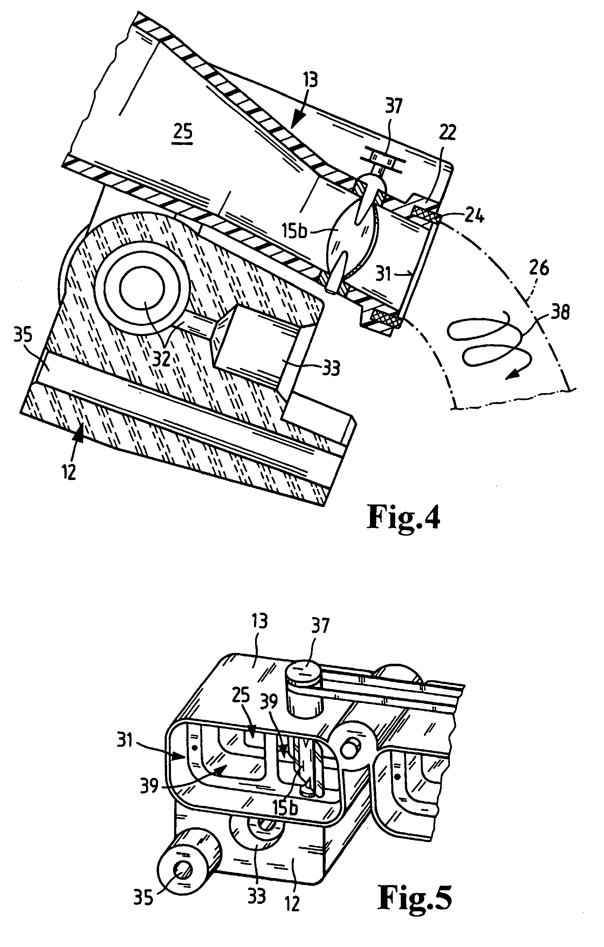

Die Unterscheidungsmerkmale des zweiten Basiskörpers 13 in Figur 4 im Bezug auf Figur 3 sollen im folgenden näher erläutert werden. Anstelle der Ladungsbewegungsklappe 15a gemäß Figur 2 ist im Ausführungsbeispiel gemäß Figur 4 eine Ladungsbewegungsklappe 15b im rechten Winkel hinsichtlich der Drehachse angeordnet. Diese kann über eine Riemenscheibe 37 angetrieben werden. Die Drehung der Drehachse um 90° führt zu einem anderen Ladungsbewegungseffekt, nämlich einem Swirl 38, angedeutet durch den durchgezogenen Pfeil. Dieser durchläuft den strichpunktiert dargestellten Zuführkanal 26 und sorgt für eine Verwirbelung um eine Drehachse entsprechend der Achse des Brennraums (nicht näher dargestellt). Auch diese Ladungsbewegung führt zu einer besseren Durchmischung des Kraftstoffs, welcher mittels des in Figur 4 nicht dargestellten Einspritzventils in den Brennraum gebracht wird.

Die Aufsicht auf die Austritte 31 des Zwischenflanschsystems gemäß Figur 4 ist in Figur 5 dargestellt. Zu erkennen ist die Riemenscheibe 37, die die Ladungsbewegungsklappe 15b antreibt. Der Saugkanal 25 teilt sich in zwei Teilkanäle 39 auf, von denen lediglich einer mit der Ladungsbewegungsklappe 15b versehen ist. Im unteren Bereich ist der erste Basiskörper mit der Durchgangsbohrung 35 und der Aufnahme 33 für das Einspritzventil zu erkennen.

## Patentansprüche

1. Zwischenflanschsystem für eine direkteinspritzende Brennkraftmaschine, aufweisend
- einen Zylinderkopfflansch (22) zum Anschluss an einen Zylinderkopf (23) der Brennkraftmaschine mit Austritten (31) für die Verbrennungsluft,
- eine Schnittstelle (30) zur Anbindung an eine Saugrohr (20) mit Eintritten (29) für die Verbrennungsluft, wobei von den Eintritten zu den Austritten Saugkanäle (25) gebildet sind,
- ein Kanalsystem (32) für unter Druck stehenden Kraftstoff mit einer Anschlussöffnung für eine Kraftstoffleitung und Aufnahmen (33) für Einspritzventile (34),
**dadurch gekennzeichnet, dass** das Kanalsystem (32) in einer ersten Baugruppe (10) mit für den auftretenden Druck ausreichender Festigkeit untergebracht ist, und die Saugkanäle (25) eine zweite Baugruppe (11) bilden, die vorrangig aus einem Werkstoff geringer Festigkeit im Vergleich zur ersten Baugruppe (10) gefertigt ist, wobei beide Baugruppen zum Zwischenflanschsystem zusammenzufügen sind.

2. Zwischenflanschsystem nach Anspruch 1, **dadurch gekennzeichnet, dass** das Kanalsystem (32) für den Kraftstoff in einer oder mehren Gruppen zu je einem ersten Grundkörper (12) zusammengefaßt ist, welcher zusammen mit weiteren Funktionsbauteilen jeweils die erste Baugruppe (10) bildet.

3. Zwischenflanschsystem nach einem der vorherigen Ansprüche, **dadurch gekennzeichnet, dass** die Saugkanäle (25) in einer oder mehren Gruppen zu je einem zweiten Grundkörper (13) zusammengefaßt sind, welcher zusammen mit weiteren Funktionsbauteilen jeweils die zweite Baugruppe (11) bildet.

4. Zwischenflanschsystem, nach einem der vorherigen Ansprüche, **dadurch gekennzeichnet, dass** die erste Baugruppe (10) vorrangig aus Metall und die zweite Baugruppe (11) vorrangig aus Kunststoff gefertigt ist.

5. Zwischenflanschsystem nach einem der vorherigen Ansprüche, **dadurch gekennzeichnet, dass** in der zweiten Baugruppe (11) als Funktionsbauteile ein System von Ladungsbewegungsklappen (15a, b) vorgesehen ist.

6. Zwischenflanschsystem nach einem der vorherigen Ansprüche, **dadurch gekennzeichnet, dass** Aufnahmen für Befestigungsmittel, insbesondere Schrauben, zum Zwecke der Fixierung des Zwischenflanschsystems in der ersten Baugrupp (10) vorgesehen sind, während die zweite Baugruppe (11) durch die erste Baugruppe (10) am Zylinderkopf gehalten wird.

7. Erste Baugruppe (10), aufweisend ein Kanalsystem (32) für unter Druck stehenden Kraftstoff mit einer Anschlussöffnung für eine Kraftstoffleitung und Aufnahmen (33) für Einspritzventile (34),zur Anwendung bei einem Zwischenflanschsystem gemäß einem der vorherigen Ansprüche.

8. Zweite Baugruppe (11), aufweisend
- einen Zylinderkopfflansch (22) zum Anschluss an einen Zylinderkopf (23) der Brennkraftmaschine mit Austritten (31) für die Verbrennungsluft,
- eine Schnittstelle (30) zur Anbindung an eine Saugrohr (20) mit Eintritten (29) für die Verbrennungsluft, wobei von den Eintritten zu den Austritten Saugkanäle (25) gebildet sind, zur Anwendung bei
einem Zwischenflanschsystem gemäß einem der vorherigen Ansprüche.

## Claims

1. Intermediate flange system for an internal combustion engine with direct fuel injection, said intermediate flange system comprising
- a cylinder head flange (22) with outlets (31) for the combustion air for connection to a cylinder head (23) of the internal combustion engine,
- an interface (30) for mounting onto an intake pipe (20) with inlets (29) for the combustion air, wherein intake ducts (25) are formed between the inlets and the outlets,
- a duct system (32) for pressurised fuel with a connection opening for a fuel line and receiving means (33) for injection valves (34), **characterised in that** the duct system (32) is accommodated in a first assembly (10) which has sufficient strength to withstand the pressure that occurs, and the intake ducts (25) form a second assembly (11), which is produced predominantly from a material which has less strength in comparison with the first assembly (10), wherein the two assemblies are joined together to form the intermediate flange system.

2. Intermediate flange system according to claim 1, **characterised in that** the duct system (32) for the fuel is combined in one or a plurality of groups to form respectively a first basic body, which first basic body together with additional functional components forms the respective first assembly (10).

3. Intermediate flange system according to one of the preceding claims, **characterised in that** the intake ducts (25) are combined in one or a plurality of groups to form respectively a second basic body (13), which second basic body together with additional functional components forms the respective second assembly (11).

4. Intermediate flange system according to one of the preceding claims, **characterised in that** the first assembly (10) is produced predominantly from metal and the second assembly (11) is produced predominantly from plastics material.

5. Intermediate flange system according to one of the preceding claims, **characterised in that** a system of charge movement flaps (15a, b) is provided in the second assembly (11) as functional components.

6. Intermediate flange system according to one of the preceding claims, **characterised in that** receiving means for securing means, more especially screws, are provided for the purposes of securing the intermediate flange system in the first assembly (10), whilst the second assembly (11) is retained on the cylinder head by means of the first assembly (10).

7. First assembly (10), including a duct system (32) for pressurised fuel, said duct system having a connection opening for a fuel line and receiving means (33) for injection valves (34) for use with an intermediate flange system according to one of the preceding claims.

8. Second assembly (11), including
- a cylinder head flange (22) for connection to a cylinder head (23) of the internal combustion engine, said cylinder head flange having outlets (31) for the combustion air,
- an interface (30) for mounting onto an intake pipe (20) with inlets (29) for the combustion air, wherein intake ducts are formed between the inlets and the outlets, for use with an intermediate flange system according to one of the preceding claims.

## Revendications

1. Système de bride intermédiaire pour un moteur à combustion interne à injection directe, présentant :
- une bride de culasse (22) destinée à être raccordée à une culasse (23) du moteur à combustion interne avec des sorties (31) pour l'air de combustion,
- une interface (30) destinée à être appliquée contre un collecteur d'admission (20) avec des entrées (29) pour l'air de combustion, avec des canaux d'admission (25) formés depuis les entrées vers les sorties,
- un système de canaux (32) pour le carburant sous pression avec une ouverture de connexion pour une conduite de carburant et des réceptions (33) pour des injecteurs (34),
**caractérisé en ce que**
le système de canaux (32) est déposé dans un premier sous-ensemble (10) présentant une résistance suffisante pour la pression entrante et les canaux d'admission (25) forment un deuxième sous-ensemble (11) composé prioritairement d'un matériau de moindre résistance par rapport au premier sous-ensemble (10), les deux sous-ensembles devant être assemblés au système de bride intermédiaire.

2. Système de bride intermédiaire selon la revendication 1,
**caractérisé en ce que**
le système de canaux (32) pour le carburant est regroupé en un ou plusieurs groupes à chaque fois par rapport à un premier corps de base (12) qui forme à chaque fois, conjointement avec d'autres composants fonctionnels, le premier sous-ensemble (10).

3. Système de bride intermédiaire selon l'une des revendications précédentes,
**caractérisé en ce que**
les canaux d'admission (25) sont regroupés en un ou plusieurs groupes par rapport à chaque fois à un deuxième corps de base (13) qui forme à chaque fois, conjointement avec d'autres composants fonctionnels, le deuxième sous-ensemble (11).

4. Système de bride intermédiaire selon l'une des revendications précédentes,
**caractérisé en ce que**
le premier sous-ensemble (10) est composé prioritairement de métal et le deuxième sous-ensemble (11) est composé prioritairement de matière plastique.

5. Système de bride intermédiaire selon l'une des revendications précédentes,
**caractérisé en ce qu'**
un système de clapets de déplacement de charge (15a, b) est prévu dans le deuxième sous-ensemble (11) au titre des composants fonctionnels.

6. Système de bride intermédiaire selon l'une des revendications précédentes,
**caractérisé en ce que**
des réceptions pour des moyens de fixation, en particulier des vis, sont prévues dans le but de fixer le système de bride intermédiaire dans le premier sous-ensemble (10), tandis que le deuxième sous-ensemble (11) est maintenu sur la culasse par le premier sous-ensemble (10).

7. Premier sous-ensemble (10), présentant un système de canaux (32) pour le carburant sous pression avec une ouverture de connexion pour une conduite de carburant et des réceptions (33) pour des injecteurs (34), destiné à être utilisé dans un système de bride intermédiaire selon l'une des revendications précédentes.

8. Deuxième sous-ensemble (11), présentant :
- une bride de culasse (22) destinée à être raccordée à une culasse (23) du moteur à combustion interne avec des sorties (31) pour l'air de combustion, et
- une interface (30) destinée à être appliquée contre un collecteur d'admission (20) avec des entrées (29) pour l'air de combustion, des canaux d'admission (25) étant formés depuis les entrées vers les sorties.
